# EUROPEAN PATENT SPECIFICATION

(11) **EP 2 048 093 B1**
(45) Date of publication and mention of the grant of the patent: **03.04.2013**
(21) Application number: 08017620.9
(22) Date of filing: 08.10.2008
(51) Int. Cl.: B65G 17/08, B65G 17/40, B65G 17/30

(54) **Multiply slotted hinge pin**
Mehrfach geschlitzter Scharnierstift
Goupille de charnière à multiples fentes

(30) Priority: 08.10.2007 DK 200701449
(43) Date of publication of application: 15.04.2009
(73) Proprietor: Ammeraal Beltech Modular A/S, 7100 Vejle (DK)
(72) Inventor: Andersen, Kenneth Westergaard, 7100 Vejle (DK); Broe, Peter, 8723 Løsning (DK)
(74) Representative: Tellefsen, Jens J.

(56) References cited:
- WO-A-2005/115883
- US-A- 5 662 211

## Description

### Field of the Invention

The present invention relates to a hinge pin or part of a hinge pin for use when connecting two adjacent modular conveyor belt links. The hinge pin is especially useful where the belt links are of the type which are provided with projecting eye parts where the eye parts have a transverse aperture such that by making the eye parts of adjacent belt links overlap, the apertures may be superposed such that it is possible to insert the hinge pin through the apertures of two adjacent belt links thereby creating a flexible connection between two adjacent belt links.

The belt links are typically injection moulded from a plastic material and are used in a wide variety of applications.

The present invention is not directed to the modular belt links as such, but is directed specifically to the hinge pin construction and in particular the inventive hinge pin as set out in independent claim 1.

### Background of the Invention

In the art it is known to provide hinge pins with different constructions in the ends in order to maintain the hinge pin in position in the apertures provided in the eye parts. Some of the means are separate blocking members which are inserted after the hinge pin has been placed, blocking the hinge pin's ability to translate in a direction perpendicular to the intended travelling direction of the assembled conveyor belt, but also hinge pins having integrated means are known in the art.

One example of a hinge pin construction with an integrated blocking mechanism is known from WO 2005/115883 wherein a hinge pin is provided with a conical section such that by forcing the hinge pin provided with the conical section through the uttermost eye part the conical section has a size larger than the aperture in the eye part whereby the conical section and the eye part will be deformed during the passage of the conical section through the aperture, but due to the resilient characteristics of the material from which the hinge pin is made, the resiliency will make the conical section bounce back such that the outer diameter of the conical section will be larger than the diameter of the aperture provided in the eye part. In this manner it is possible to maintain the hinge pin in a firm position between the outermost and next to outermost eye parts of a conveyor belt.

It is, however, difficult, to remove the hinge pin. Removal of the hinge pin is interesting when either the hinge pin is damaged or when it is necessary to replace one or more of the modular belt links. This process may easily be carried out if the hinge pin is easy to remove. In order to remove the hinge pin according to the prior art document WO 2005/115883 it is necessary to use a relatively high force in order to force the conical section which will function as a barb against the circumference of the aperture provided in the eye part. In this manner it is likely that the modular belt link and in particular the eye part will be damaged during the removal of the hinge pin. In addition, the surface of the conical part which abuts against the inside of the eye part will make it difficult to thoroughly clean and thereby maintain a relatively high hygienic standard due to the very intimate relationship between the conical part of the hinge pin and the eye part in question.

A further example of a prior art system is known from US 5,662,211 where the hinge pin is provided with a slot such that two barbs are provided in either end of the hinge pin. The hinge pin is deformable due to the provision of the slot such that although a slight conical section is provided in either end of the hinge pin, the conical section's normally larger circumference than the apertures provided in the eye parts of the modular belt links may be minimized by forcing the two barbs together, whereby the circumference of the conical section becomes equal to or smaller than the circumference or cross section of the hinge pin. In this manner it is possible to relatively easily insert the hinge pin in the apertures provided in the eye parts. When it is desirable to remove the hinge pin, this may be carried out by forcing the barbs together thereby closing the slot such that the slightly conical section attains the geometrical shape of having a circumference smaller than the aperture, whereby the hinge pin may be removed. This in turn makes unauthorized removal of the hinge pin possible which may cause inadvertent malfunctioning of the conveyor structure as such. Furthermore, the single slot has proven to accumulate debris and has indicated that it is very difficult to thoroughly clean the slots in that no natural draining is available in a situation where the slot is substantially horizontal whereby water retained by debris such as residue from meat or other produce may be stuck in the slot and cause bacteria growth and thereby unhygienic circumstances.

### Object of the Invention

Consequently, it is an aim of the present invention to overcome the problems with the prior art devices.

### Description of the Invention

The present invention addresses this by providing a hinge pin or part of a hinge pin wherein the hinge pin is shorter than the width of the belt links perpendicular to the intended travelling direction, and wherein the hinge pin has a central section having a cylindrical shape in the axial direction and where the ends of the hinge pin comprise a conical section, said conical section having an outer circumference larger than the axial section of the pin, where the conical section is provided with three or more radially extending slots thereby creating three or more conical part sections, where the width of each slot is such that when the three or more conical part sections abut, the circumference is equal to or less the circumference of the cylindrical part of the hinge pin.

By providing three or more slots extending radially from the centre of the cross section of the hinge pin it is foreseen that water will in all circumstances and regardless of the position of the hinge pin be able to drain out of the slots and thereby assuring that a thorough cleaning of the hinge pin is achieved. The three or more slots also allows cleaning routines, such as high pressure water jets to effectively access and clean the slots and thereby the connection between adjacent belt links.

Furthermore, the three or more slots will provide for three parts making up the conical section of the hinge pin which cannot easily be manipulated such that the circumference of the conical section by using a normal tool may be minimized to such an extent that it is possible to pass the conical section up through the aperture in the eye parts. With the invention it is foreseen that it is necessary to drill or otherwise remove the end of the hinge pin in order to be able to remove the hinge pin as such. This in turn ensures that authorized personnel only, will remove the hinge pin such that the conveyor belt will not be in danger of becoming damaged.

By orienting the conical section as indicated in a further advantageous embodiment of the invention such that the conical section is oriented with the larger circumference towards the ends of the pin it is achieved that the largest cross sectional size of the hinge pin will abut against the outside eye part's inner face whereby it is possible to provide the largest contact area between the eye parts of each modular belt link in relation to the hinge pin. This is important in order to be able to transfer the loads which are associated with the conveyor belts.

In a further advantageous embodiment the hinge pin comprises three or more separate sections where the conical pin sections are separate elements optionally having a shorter cylindrical section and at least one cylindrical pin section. In this embodiment it is foreseen that the conical sections may be separate elements which when removed may provide for the rest of the hinge pin being removed and reused such that only the conical sections as such are destroyed during removal. This provides for a more uniform and standardized construction with only few wear and tear parts, and this is particularly interesting in conveyor belts of the side flexing type where traditionally the wear is concentrated to the outer parts of the belt. By providing the conical sections with a short cylindrical section corresponding in size to the pin it is possible to dimension the separate hinge pin parts such that the majority of wear and tear will be present in the separate hinge pin sections comprising the conical section such that by removing these separate sections and replace them by new sections only a limited part of the hinge pin needs to be replaced due to wear and tear.

In a still further advantageous embodiment the conical pin section has a colour different from the colour of the modular belt links, the cylindrical pin section and other types of pins used. By providing the hinge pin sections with different colours they may more easily be identified in that it is foreseen that sections of the conveyor belt may be preassembled where traditional hinge pins and other pins may be used for assembling the different sections of the conveyor belt. Therefore, each section may be delimited by a hinge pin according to the present invention where the end parts of the hinge pins may be provided in a colour which is easily identifiable with respect to the general colour of the conveyor belt.

Another situation where this is interesting is, as already mentioned above, when the outer most sections of the assembled conveyor belt and in particular the hinge pins are prone to wear. By colouring the pin sections differently from the rest of the conveyor structure it becomes easier to identify places where the end piece may be missing. When the pin is split in three sections, and one end piece is missing, it may still be possible to operate the belt, but further wear may cause failure in the construction. It is easy visibly to detect a difference, i.e. a coloured pin section missing, and thereby the place to be repaired.

In a further advantageous embodiment each slot has a depth in the axial direction of the hinge pin being equal to or less than the extent in the axial direction of the conical section. With this geometrical relationship it is assured that even after long time use the conical section will be urged away from the centre axis of the pin, in that the material will urge the parts of the conical section away, thereby remain in "locked" position with the eye part on the belt link around the aperture.

For a more flexible solution the slots may have an extend deeper than the conical section such that it is possible to squeeze part of the cylindrical section of the pin to a smaller radius. The end sections will in this manner be more flexible, and easier to replace.

### Description of the Drawing

In the drawing a specific embodiment of the invention will be explained with respect to the accompanying figures, wherein
- Figure 1: illustrates an asymmetric view of an end section of a hinge pin according to the invention;
- Figure 2: a side view of the hinge pin section according to figure 1;
- Figure 3: a side view of a one-piece hinge pin; and
- Figure 4: a cross section of a second embodiment of the conical section of the hinge pin.
- Figure 5: detail of a hinge pin according to the invention connecting two adjacent belt links.

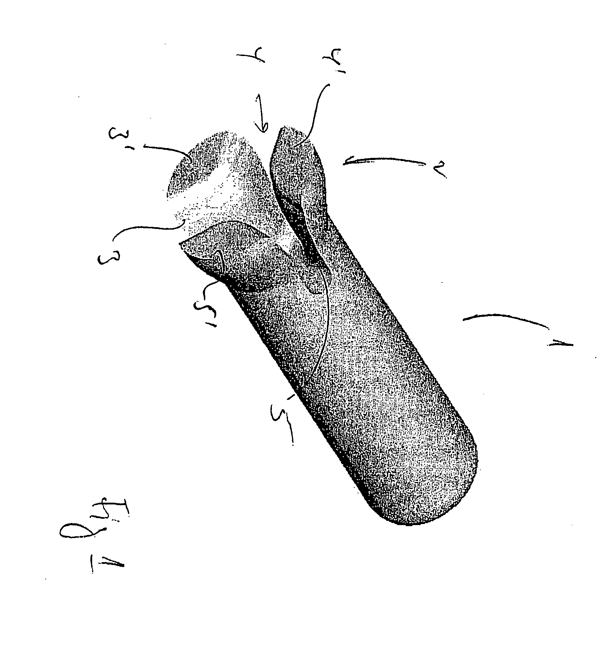

Turning to figure 1 a hinge pin section 1 comprising a conical section 2 is illustrated. The conical section is provided with slots 3, 4, 5 separating the conical section 2 into three barbs 3', 4', 5'. The slots 3, 4, 5 have a size and a depth such that it is possible when forcing the barbs 3', 4', 5' into abutment, whereby the outer circumference of the conical section is less the outer circumference of the cylindrical section 1 of the hinge pin section, to insert the pin into the apertures provided in the modular belt links.

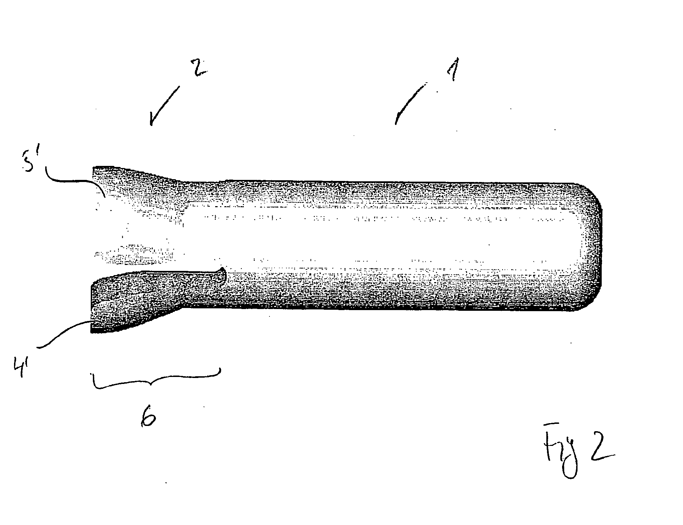

As is evident from figure 2, the depth of the slots 6 provided in a conical section 2 in this embodiment extends into the cylindrical section 1 of the hinge pin. In this manner it is provided that the barbs 3', 4', 5' may be squeezed together in order to have a circumference smaller than the circumference of the cylindrical section 1 such that the conical section 2 may be passed through an aperture in an eye part and thereafter expanded in order to attain the locking function where the barbs 3', 4', 5' may abut the inside of an eye part (not illustrated). Traditionally the hinge pins are made from a resilient material, whereby the inherent resiliency provides the expansion, which is actually the pin gaining its original shape.

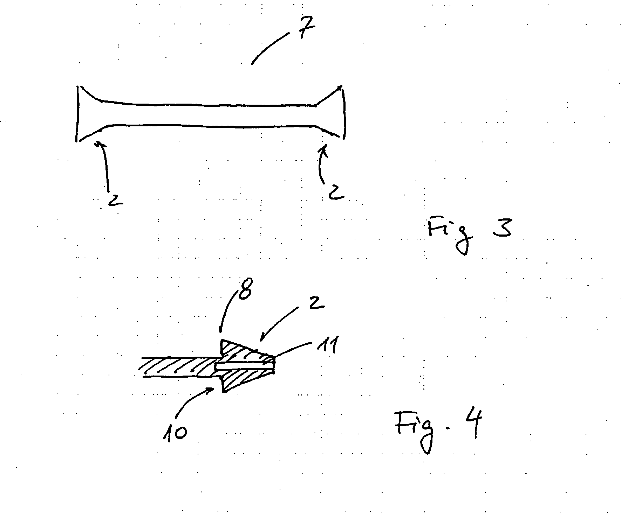

In figure 3 is schematically illustrated a one piece hinge pin where the hinge pin 7 is provided with conical sections 2 integrally provided in either end of the hinge pin 7.

Although it is advantageous to orientate the conical section 2 as illustrated with reference to figures 1, 2 and 3 the conical section may also be arranged as illustrated with reference to figure 4 where the larger circumference 8 of the conical section 2 is provided away from the end of the hinge pin such that the upstanding surface 10 of the conical section, i.e. the section connecting the cylindrical section of the hinge pin with the conical phases of the conical section 2 are designed to abut against the eye part arranged immediately inside the outermost eye part. The corresponding slot 11 must have a size and a depth allowing the conical part section 2 to be deformed sufficiently in order to insert the conical section and thereby the hinge pin through the eye parts of the modular belt links. The tapered configuration of the conical part section 2 will, however, be helpful in guiding and compressing the conical section 2 through the eye part's aperture such that a relatively easy installation may also be achieved with this construction.

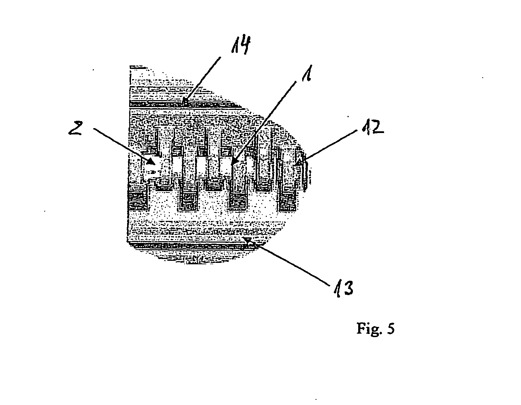

Turning to fig. 5 a hinge pin 1 according to the invention is illustrated arranged through superposed apertures provided in eye parts 12 of adjacent belt links 13,14.

As is clear from the illustration the outermost eye part will hinder the hinge pin 1 in being inadvertently dislodged from its position in that the expandable portion 2 of the hinge pin 1, during insertion through the aperture provided in the outermost eyepart will have been constricted and squeezed together, as explained above, and after passage of the outer most eyepart, the petals will expand, such that removal is impossible. Due to the configuration of the petals 5 - see explanation above, it is also very difficult to remove the pin without destroying it.

In the illustrated embodiment only the expandable section is illustrated, but as explained above a central cylindrical pin may be arranged between two outer sections as illustrated in fig. 5.

## Claims

1. Hinge pin (1) or part of hinge pin for use when connecting two adjacent modular conveyor belt links of the type where the belt links (13,14) are provided with projecting eye parts (12), where the eye parts (12) are provided with a transverse aperture, such that a hinge pin (1) may be inserted through overlapping eye parts (12) through the apertures hingely connecting two adjacent belt links (13,14),
wherein the hinge pin (1) has a central section having a cylindrical shape in the axial direction and where at least one end of the hinge pin (1) comprises a conical section (2), said conical section (2) having an outer circumference larger than the central section of the pin (1), **characterised in that** the conical section (2) is provided with three or more radially extending slots (3,4,5) thereby creating three or more conical part sections (3',4',5'), where the width of each slot is such that when the three or more conical part sections (3',4',5') abut, the circumference is equal to or less the circumference of the central part of the hinge pin (1).

2. Hinge pin according to claim 1, wherein the conical section (2) is oriented with the larger circumference towards the end of the pin (1).

3. Hinge pin according to claim 1 wherein the hinge pin (1) comprises three or more separate sections where the conical pin sections are separate elements optionally having a shorter cylindrical section and at least one cylindrical pin section.

4. Hinge pin according to claim 2 wherein the conical pin sections have a colour different from the colour of the cylindrical pin section.

5. Hinge pin according to any preceding claim where each slot (3',4',5') has a depth (6) in the axial direction of the hinge pin being equal to or less than the extend in the axial direction of the conical section (2).

## Patentansprüche

1. Scharnierstift (1) oder Scharnierstiftteil zur Verwendung beim Verbinden zwei aneinandergrenzender Förderbandglieder von dem Typ, bei dem die Bandglieder (13, 14) vorspringende Ösenteile (12) aufweisen, wobei die Ösenteile (12) jeweils eine quer verlaufende Öffnung aufweisen, so dass ein Scharnierstift (1) durch überlappende Ösenteile (12) durch die Öffnungen einschiebbar ist und zwei aneinandergrenzende Bandglieder (13, 14) scharnierartig verbindet, wobei der Scharnierstift (1) einen in der Achsialrichtung zylindrisch gestalteten mittleren Abschnitt aufweist, und wobei wenigstens ein Ende des Scharnierstiftes (1) einen konischen Abschnitt (2) aufweist, der einen längeren Außenumkreis als der mittlere Abschnitt des Stiftes (1) aufweist, **dadurch gekennzeichnet, dass** der konische Abschnitt (2) drei oder mehrere radial verlaufende Schlitze (3, 4, 5) aufweist und somit drei oder mehrere Konusteilabschnitte (3', 4', 5') bildet, wobei die Breite der jeweiligen Schlitze so ist, dass wenn die drei oder mehreren Konusteilabschnitte (3', 4', 5') aneinanderstoßen, ist der Umkreis gleich oder kleiner als der Umkreis des Mittelteils des Scharnierstiftes (1).

2. Scharnierstift nach Anspruch 1, wobei der konische Abschnitt (2) mit dem grösseren Umkreis in der Richtung des Stiftendes (1) ausgerichtet ist.

3. Scharnierstift nach Anspruch 1, wobei der Scharnierstift (1) drei oder mehrere getrennte Abschnitte umfasst, wobei die konischen Stiftabschnitte getrennte Elemente sind, die wahlfrei einen kürzeren zylindrischen Abschnitt und wenigstens einen zylindrischen Stiftabschnitt aufweisen.

4. Scharnierstift nach Anspruch 2, wobei die konischen Stiftabschnitte eine von der Farbe des zylindrischen Stiftabschnittes unterschniedliche Farbe aufweisen.

5. Scharnierstift nach irgendeinem der vorhergehenden Ansprüche, wobei die Schlitze (3', 4', 5') in der Achsialrichtung des Scharnierstiftes jeweils eine Tiefe (6) aufweisen, die gleich oder kleiner als die Ausdehnung in der Achsialrichtung des konischen Abschnittes (2) ist.

## Revendications

1. Goupille de charnière (1) ou partie d'une goupille de charnière pour être utilisée pour la connection de deux maillons de bande transporteuse modulaire adjacents du type ayant des maillons de bande (13,14) réalisés avec des parties d'oeillet saillantes (12), les parties d'oeillet (12) ayant une ouverture transversale de sorte qu'une goupille de charnière (1) peut être insérée à travers des parties d'oeillet chevauchantes (12) à travers les ouvertures pour le raccordement articulé de deux maillons de bande adjacents, dans laquelle la goupille de charnière (1) présente une partie centrale ayant une forme cylindrique dans la direction axiale et au moins une extrémité de la goupille de charnière (1) comporte une partie conique (2), ladite partie conique (2) comprend une circonférence extérieure qui est supérieure à la partie centrale de la goupille (1), **caractérisée en ce que** la partie conique (2) est réalisée avec trois ou plusieurs fentes (3,4,5) s'étendant radialement, ainsi créant trois ou plusieurs sections de parties coniques (3',4',5'), la largeur de chaque fente est ainsi qu'au moment où les trois ou plusieurs sections de parties coniques (3',4',5') viennent en butée la circonférence est égale ou inférieure à la circonférence de la partie centrale de la goupille de charnière (1).

2. Goupille de charnière selon la revendication 1, dans laquelle la partie conique (2) est orientée avec la circonférence plus large vers l'extrémité de la goupille (1).

3. Goupille de charnière selon la revendication 1, dans laquelle la goupille de charnière (1) comprend trois ou plusieurs parties séparées où les parties de goupille conique constituent des éléments séparés ayant facultativement une partie cylindrique plus courte et au moins une partie de goupille cylindrique.

4. Goupille de charnière selon la revendication 2, dans laquelle les parties de goupille conique comprennent une couleur différente de la couleur de la partie de goupille cylindrique.

5. Goupille de charnière selon l'une quelconque des revendications précédentes, chaque chaque fente (3',4',5') comprend une profondeur (6) dans la direction axiale de la goupille de charnière étant égale ou inférieure à l'étendue dans la direction axiale de la partie conique (2).
